(19) Europäisches Patentamt

European Patent Office

Office européen des brevets

(11) **EP 4 665 052 A1**

(12) # EUROPEAN PATENT APPLICATION
published in accordance with Art. 153(4) EPC

(43) Date of publication:
**17.12.2025 Bulletin 2025/51**

(21) Application number: **24753667.5**

(22) Date of filing: **08.02.2024**

(51) International Patent Classification (IPC):
**H04W 72/21** (2023.01)       **H04L 1/08** (2006.01)
**H04W 72/04** (2023.01)       **H04W 74/00** (2009.01)
**H04W 84/06** (2009.01)

(52) Cooperative Patent Classification (CPC):
**H04L 1/08; H04W 72/04; H04W 72/21;
H04W 74/00; H04W 84/06**

(86) International application number:
**PCT/KR2024/001914**

(87) International publication number:
**WO 2024/167346 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **10.02.2023  KR 20230018314
31.10.2023  US 202363546734 P**

(71) Applicant: **LG Electronics Inc.
Yeongdeungpo-gu
Seoul 07336 (KR)**

(72) Inventors:
• **SHIN, Seokmin
Seoul 06772 (KR)**

• **PARK, Haewook
Seoul 06772 (KR)**
• **BAE, Duckhyun
Seoul 06772 (KR)**
• **KIM, Jaehyung
Seoul 06772 (KR)**
• **YANG, Suckchel
Seoul 06772 (KR)**
• **KIM, Seonwook
Seoul 06772 (KR)**

(74) Representative: **Plasseraud IP
104 Rue de Richelieu
CS92104
75080 Paris Cedex 02 (FR)**

(54) **DEVICE AND METHOD FOR CONFIGURING RESOURCE FOR PUCCH REPETITIVE TRANSMISSION IN WIRELESS COMMUNICATION SYSTEM**

(57)    According to various embodiments of the present disclosure, there is provided a method of operating a user equipment (UE) in a wireless communication system. The method includes receiving first information of an additional physical resource block (PRB) offset from a base station; receiving second information of multiple repetition factors from the base station; determining a specific PRB for a repetition transmission of a physical uplink control channel (PUCCH) by applying the additional PRB offset a specific number of times based on a specific repetition factor among the multiple repetition factors; and performing the repetition transmission of the PUCCH based on the specific PRB.

**EP 4 665 052 A1**

**(Cont. next page)**

【FIG. 5】

**Description**

[Technical Field]

The present disclosure relates to a wireless communication system. More particularly, the present disclosure relates to a device and method for configuring resources for a PUCCH repetition transmission in a wireless communication system.

[Background Art]

NR supports multiple numerologies (or subcarrier spacing (SCS)) for supporting diverse 5G services. For example, if the SCS is 15 kHz, the NR supports a wide area in traditional cellular bands; if the SCS is 30 kHz/60 kHz, the NR supports a dense-urban, lower latency, and wider carrier bandwidth, and if the SCS is 60 kHz or higher, the NR supports a bandwidth greater than 24.25 GHz to overcome phase noise.

If a UE in an initial access step successfully receives Msg. 4 PDSCH transmitted from a base station while performing a RACH procedure, the UE transmits HARQ-ACK information. In this instance, resources required for the UE to transmit PUCCH for Msg. 4 HARQ-ACK are predefined as initial PUCCH resource sets. The base station selects one of the defined initial PUCCH resource sets via RRC signaling and selects one PUCCH resource of the selected PUCCH resource set based on a specific field of DCI for scheduling Msg. 4 PDSCH and an CCE index of the DCI. The initial PUCCH resource set used in this case is defined in table 9.2.1-1 of clause 9.2.1 of 3GPP TS (technical standard) 38.213 specification.

Signals/channels considered in the existing NR system may not operate properly because they do not satisfy a target SNR in a specific environment (e.g., NTN). Characteristically, PUCCH formats defined in the initial PUCCH resource set may require enhancement, such as repetition transmission, in an NTN environment.

[Disclosure]

[Technical Problem]

In order to solve the above-described problems, the present disclosure provides a device and method for configuring resources for a PUCCH repetition transmission in a wireless communication system.

The present disclosure provides a device and method for configuring independent resources for a PUCCH repetition transmission compared to existing resources when a repetition transmission is applied to a PUCCH format defined in an initial PUCCH resource set in a wireless communication system.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

According to various embodiments of the present disclosure, there is provided a method of operating a user equipment (UE) in a wireless communication system, the method comprising receiving first information of an additional physical resource block (PRB) offset from a base station; receiving second information of multiple repetition factors from the base station; determining a specific PRB for a repetition transmission of a physical uplink control channel (PUCCH) by applying the additional PRB offset a specific number of times based on a specific repetition factor among the multiple repetition factors; and performing the repetition transmission of the PUCCH based on the specific PRB.

According to various embodiments of the present disclosure, there is provided a method of operating a base station in a wireless communication system, the method comprising transmitting first information of an additional physical resource block (PRB) offset to a user equipment (UE); transmitting second information of multiple repetition factors to the UE; and receiving, from the UE, a repetition transmission of a physical uplink control channel (PUCCH) based on a specific PRB. The specific PRB for the repetition transmission of the PUCCH is determined by applying the additional PRB offset a specific number of times based on a specific repetition factor among the multiple repetition factors.

According to various embodiments of the present disclosure, there is provided a user equipment (UE) in a wireless communication system, the UE comprising a transceiver, at least one processor, and at least one memory operably connectable to the at least one processor and storing instructions performing operations based on being executed by the at least one processor, and the operations comprise all steps of a method of operating the UE according to various embodiments of the present disclosure.

According to various embodiments of the present disclosure, there is provided a base station in a wireless communication system, the base station comprising a transceiver, at least one processor, and at least one memory operably connectable to the at least one processor and storing instructions performing operations based on being executed by the at least one processor, and the operations comprise all steps of a method of operating the base station according to various embodiments of the present disclosure.

According to various embodiments of the present disclosure, there is provided a control device controlling a user equipment in a wireless communication system, the control device comprising at least one processor and at least one memory operably connected to the at least one processor, and the at least one memory stores instructions performing operations based on being executed by the at least one processor, and the operations comprise all steps of a method of operating the user equipment according to various embodiments of the present disclosure.

According to various embodiments of the present disclosure, there is provided a control device controlling a base station in a wireless communication system, the control device comprising at least one processor and at least one memory operably connected to the at least one processor, and the at least one memory stores instructions performing operations based on being executed by the at least one processor, and the operations comprise all steps of a method of operating the base station according to various embodiments of the present disclosure.

According to various embodiments of the present disclosure, there are provided one or more non-transitory computer readable mediums storing one or more instructions, and the one or more instructions perform operations based on being executed by one or more processors, and the operations comprise all steps of a method of operating a user equipment according to various embodiments of the present disclosure.

According to various embodiments of the present disclosure, there are provided one or more non-transitory computer readable mediums storing one or more instructions, and the one or more instructions perform operations based on being executed by one or more processors, and the operations comprise all steps of a method of operating the base station according to various embodiments of the present disclosure.

[Advantageous Effects]

In order to solve the above-described problems, the present disclosure can provide a device and method for configuring resources for a PUCCH repetition transmission in a wireless communication system.

The present disclosure can provide a device and method for configuring independent resources for a PUCCH repetition transmission compared to existing resources when a repetition transmission is applied to a PUCCH format defined in an initial PUCCH resource set in a wireless communication system.

[Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.

FIG. 1 illustrates physical channels used in a system applicable to the present disclosure and an example of a general signal transmission method using the physical channels.

FIG. 2 illustrates an example of a structure of a radio frame used in a system applicable to the present disclosure.

FIG. 3 illustrates an example of a slot structure used in a system applicable to the present disclosure.

FIG. 4 illustrates an example of a slot structure of a radio frame used in a system applicable to the present disclosure.

FIG. 5 illustrates an example of applying an additional PRB offset in a system applicable to the present disclosure.

FIG. 6 illustrates an example of applying an additional PRB offset in a system applicable to the present disclosure.

FIG. 7 illustrates an example of a process of operating a UE in a system applicable to the present disclosure.

FIG. 8 illustrates an example of a process of operating a base station in a system applicable to the present disclosure.

FIG. 9 illustrates an example of a structure of a first device and a second device in a system applicable to the present disclosure.

[Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

## General Signal Transmission Method in 3GPP

## Physical Channels and General Signal Transmission

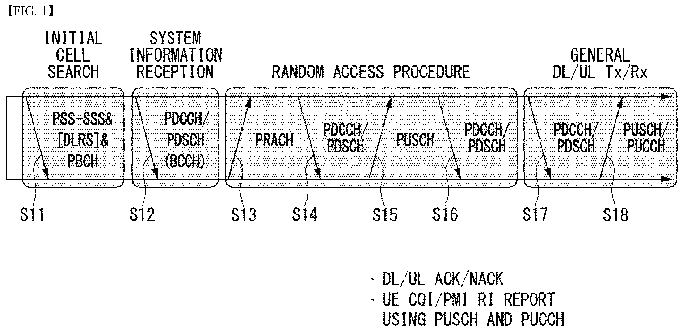

FIG. 1 illustrates physical channels used in a system applicable to the present disclosure and an example of a general signal transmission method using the physical channels. More specifically, FIG. 1 illustrates physical channels and general signal transmission used in the 3GPP system.

FIG. 1 illustrates physical channels and general signal transmission used in the 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

A UE that is powered on again while being powered off or enters a new cell performs an initial cell search operation such as synchronizing with a base station (BS) in S11. To this end, the UE receives a primary synchronization channel (PSCH) and a secondary synchronization channel (SSCH) from the base station to synchronize with the base station and acquires information such as a cell identity (ID), etc. Further, the UE may receive a physical broadcast channel (PBCH) from the base station and acquire in-cell broadcast information. The UE may receive a downlink reference signal (DL RS) in an initial cell search step to check a downlink channel state.

The UE that completes the initial cell search may receive a physical downlink control channel (PDCCH) and a physical downlink shared channel (PDSCH) corresponding to the PDCCH to acquire more detailed system information, in S12.

Next, the UE may perform a random access procedure in order to complete an access to the base station, in S13 to S16. Specifically, the UE may transmit a preamble on a physical random access channel (PRACH) in S13, and receive a random access response (RAR) for the preamble on the PDCCH and the PDSCH corresponding to the PDCCH in S14. Thereafter, the UE may transmit a physical uplink shared channel (PUSCH) using scheduling information within the RAR in S15, and perform a contention resolution procedure such as the PDCCH and the PDSCH corresponding to the PDCCH in S16.

Next, the UE that performs the above-described procedure may perform PDCCH/PDSCH reception S17 and PUSCH/physical uplink control channel (PUCCH) transmission S18, as a general uplink/downlink signal transmission procedure. Control information that the UE transmits to the base station is referred to as uplink control information (UCI). The UCI includes hybrid automatic repeat and request (HARQ) acknowledgement/negative ACK (ACK/NACK), scheduling request (SR), channel state information (CSI), etc. The CSI includes a channel quality indication (CQI), a precoding matrix indicator (PMI), a rank indicator (RI), etc. The UCI is generally transmitted on the PUCCH, but if control information and data need to be transmitted at the same time, the UCI may be transmitted on the PUSCH. The UE may aperiodically transmit the UCI on the PUSCH based on a request/indication of the network.

## Orthogonal Frequency Division Multiplexing (OFDM) Numerology

A new RAT system uses an OFDM transmission scheme or a similar transmission scheme thereto. The new RAT system may follow different OFDM parameters from OFDM parameters of LTE. Alternatively, the new RAT system may follow numerology of existing LTE/LTE-A as it is but have a larger system bandwidth (e.g., 100 MHz). Alternatively, one cell may support a plurality of numerologies. In other words, UEs that operate with different numerologies may coexist in one cell.

## Radio Frame Structure

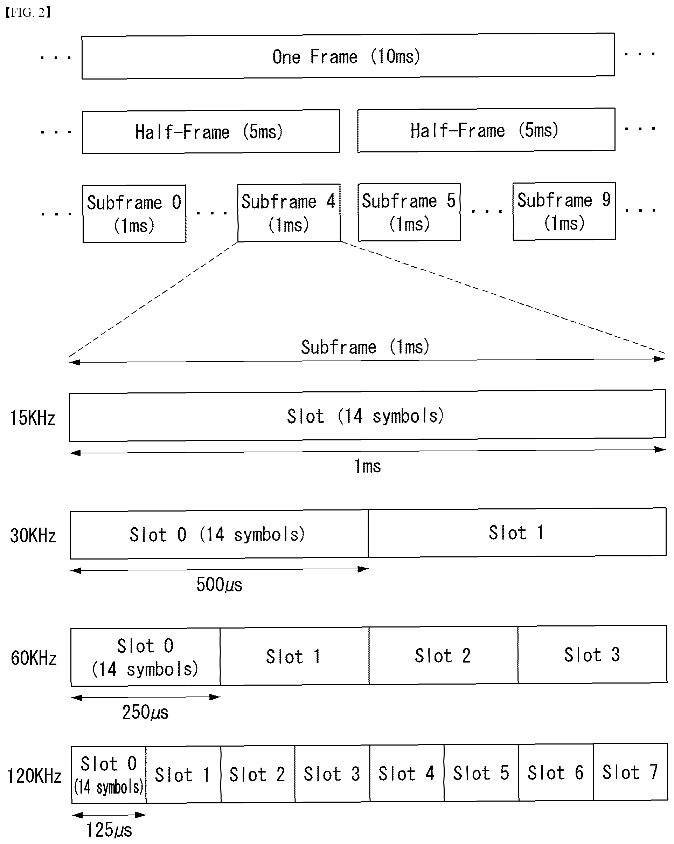

FIG. 2 illustrates an example of a structure of a radio frame used in a system applicable to the present disclosure.

In NR, uplink and downlink transmission consists of frames. A radio frame has a length of 10 ms and is defined as two 5 ms half-frames (HFs). The half-frame is defined as five 1 ms subframes (SFs). The subframe is split into one or more slots, and the number of slots in the subframe depends on a subcarrier spacing (SCS). Each slot includes 12 or 14 OFDM(A) symbols depending on a cyclic prefix (CP). When a normal CP is used, each slot includes 14 symbols. When an extended CP is used, each slot includes 12 symbols. The symbol may include an OFDM symbol (or CP-OFDM symbol) and an SC-FDMA symbol (or DFT-s-OFDM symbol).

Table 1 shows that when the normal CP is used, the number of symbols per slot, the number of slots per frame, and the number of slots per subframe vary depending on the SCS.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

$N^{slot}_{symb}$ is the number of symbols in the slot. $N^{frame,u}_{slot}$ is the number of slots in the frame. $N^{subframe,u}_{slot}$ is the number of slots in the subframe.

Table 2 shows that when the extended CP is used, the number of symbols per slot, the number of slots per frame, and the number of slots per subframe vary depending on the SCS.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The NR supports multiple numerologies (or subcarrier spacing (SCS)) for supporting various 5G services. For example, when the SCS is 15 kHz, a wide area in traditional cellular bands is supported, when the SCS is 30 kHz/60 kHz, dense-urban, lower latency, and wider carrier bandwidth are supported, and when the SCS is 60 kHz or more, a bandwidth larger than 24.25 GHz is supported to overcome phase noise.

An NR frequency band may be defined as two types of frequency ranges (FR1 and FR2). Values of the frequency ranges may be changed, and, for example, the two types of frequency ranges (FR1 and FR2) may be as shown in Table 3 below. For convenience of description, among frequency ranges used in an NR system, FR1 may denote "sub 6GHz range", and FR2 may denote "above 6GHz range" and may be referred to as millimeter wave (mmW).

[Table 3]

| Frequency Range Designation | Corresponding Frequency Range | Subcarrier Spacing |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, FR1 may include a frequency band from 410 MHz to 7125 MHz, as shown in Table 4 below. That is, FR1 may include a frequency band of 6 GHz (or 5850, 5900, 5925 MHz, etc.) or higher. For example, the frequency band of 6 GHz (or 5850, 5900, 5925 MHz, etc.) or higher included in FR1 mat include an unlicensed band. The unlicensed band may be used for diverse purposes, for example, used for communication for vehicles (e.g., self-driving).

[Table 4]

| Frequency Range Designation | Corresponding Frequency Range | Subcarrier Spacing |
|---|---|---|
| FR1 | 410MHz - 7125MHz | 15, 30, 60kHz |
| FR2 | 24250MHz - 52600MHz | 60, 120, 240kHz |

In the NR system, OFDM(A) numerology (e.g., SCS, CP length, etc.) may be differently configured between a plurality of cells merged into one UE. Hence, an (absolute time) duration of a time resource (e.g., SF, slot or TTI) (for convenience, collectively referred to as a time unit (TU)) consisting of the same number of symbols may be configured differently between the merged cells.

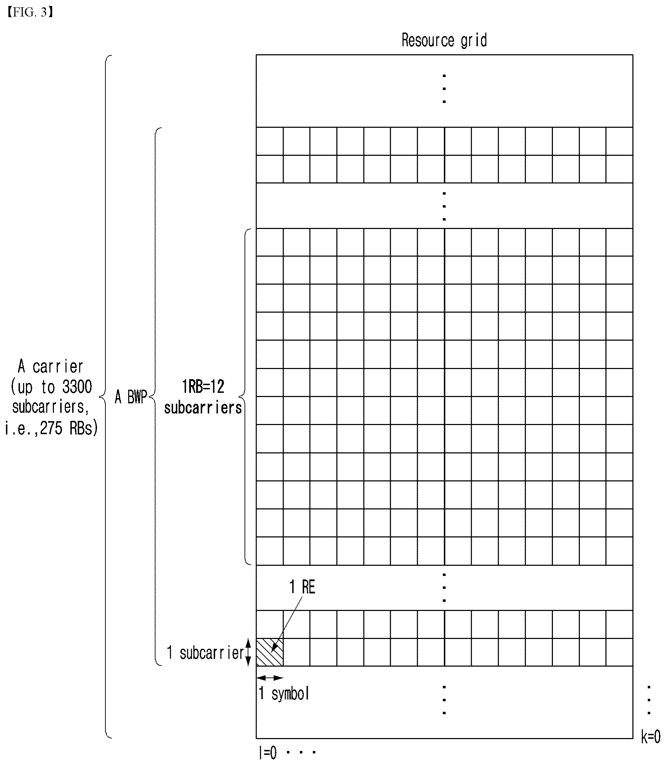

FIG. 3 illustrates an example of a slot structure used in a system applicable to the present disclosure.

A slot includes a plurality of symbols in a time domain. For example, one slot includes 7 symbols in a normal CP, while one slot includes 6 symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., 5) BWPs. The data communication may be performed through an activated BWP, and only one BWP may be activated in one UE. In a resource grid, each element is referred to as a resource element (RE), and one complex symbol may be mapped to each RE.

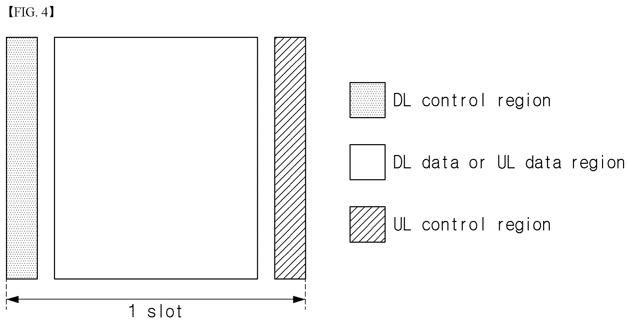

FIG. 4 illustrates an example of a slot structure of a radio frame used in a system applicable to the present disclosure.

More specifically, FIG. 4 illustrates a slot structure of a frame of the NR system as an exemplary system.

As illustrated in FIG. 4, a frame structure of NR is characterized by a self-contained structure in which all of DL control channel, DL or UL data, UL control channel, etc. can be included in one slot. In this instance, DL data scheduling information, UL data scheduling information, etc. may be transmitted on the DL control channel, and ACK/NACK information for DL data, CSI information (modulation and coding scheme information, MIMO transmission related information, etc.), scheduling request, etc. may be transmitted on the UL control channel. In FIG. 4, a time gap for DL-to-UL or UL-to-DL switching may exist between a control region and a data region. Further, a part of the DL control channel/DL data/UL data/UL control channel may not be configured within one slot. Alternatively, order of the channels constituting one slot may vary. (e.g., DL control/DL data/UL control/UL data or UL control/UL data/DL control/DL data, etc.)

## Composition and Method of the Invention

NR frame structure, RACH, U-Band system, etc. can be applied by being combined with methods described in the present disclosure, or can be supplemented to clarify technical features of methods described in the present disclosure.

In addition, methods related to configuration of a PRACH transmission occasion described below are related to uplink transmission and can be equally applied to an uplink signal transmission method in the NR system (licensed band) or the U-Band system (unlicensed band) described above. The technical ideas described in the present disclosure can be modified or replaced to suit terms, expressions, structures, etc. defined in each system so that they can be implemented in the corresponding systems.

For example, the uplink transmission through the methods related to configuration of the PRACH transmission occasion described below can be performed in an L-cell and/or a U-cell defined in the NR system or the U-Band system.

NR supports multiple numerologies (or subcarrier spacing (SCS)) for supporting diverse 5G services. For example, if the SCS is 15 kHz, the NR supports a wide area in traditional cellular bands; if the SCS is 30 kHz/60 kHz, the NR supports a dense-urban, lower latency, and wider carrier bandwidth, and if the SCS is 60 kHz or higher, the NR supports a bandwidth greater than 24.25 GHz to overcome phase noise.

If a UE in an initial access step successfully receives Msg. 4 PDSCH transmitted from a base station while performing a RACH procedure, the UE transmits HARQ-ACK information. In this instance, resources required for the UE to transmit PUCCH for Msg. 4 HARQ-ACK are predefined as initial PUCCH resource sets. The base station selects one of the defined initial PUCCH resource sets via RRC signaling and selects one PUCCH resource of the selected PUCCH resource set based on a specific field of DCI for scheduling Msg. 4 PDSCH and an CCE index of the DCI. The initial PUCCH resource set used in this case is defined in table 9.2.1-1 of clause 9.2.1 of 3GPP TS (technical standard) 38.213 specification. Table 5 shows Table 9.2.1-1: PUCCH resource sets before dedicated PUCCH resource configuration of 3GPP TS 38.213.

[Table 5]

| Index | PUCCH format | First symbol | Number of symbols | PRB offset $RB_{\text{BWP}}^{\text{offset}}$ | Set of initial CS indexes |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\left\lfloor N_{\text{BWP}}^{\text{size}}/4 \right\rfloor$ | {0, 3, 6, 9} |

Signals/channels considered in the existing NR system may not operate properly because they do not satisfy a target SNR in a specific environment (e.g., NTN). Characteristically, PUCCH formats defined in the initial PUCCH resource set may require enhancement, such as repetition transmission, in an NTN environment. That is, the present disclosure proposes a device and method for configuring independent resources for a PUCCH repetition transmission compared to existing resources when repetition transmission is applied to the PUCCH format defined in the initial PUCCH resource set.

## 1. Method of configuring independent time/frequency resources for PUCCH repetition transmission

Signals/channels considered in the existing NR system may not operate properly because they do not satisfy a target SNR in a specific environment (e.g., NTN). Characteristically, PUCCH formats defined in the initial PUCCH resource set may require enhancement, such as repetition transmission, in an NTN environment. That is, the present disclosure proposes a device and method for configuring independent resources for a PUCCH repetition transmission compared to existing resources when repetition transmission is applied to the PUCCH format defined in the initial PUCCH resource set.

## 1. Method of configuring independent time/frequency resources for PUCCH repetition transmission

Before a dedicated PUCCH resource set is allocated to a UE, the UE performing a PUCCH transmission uses PUCCH resources defined in Table 9.2.1-1 of 3GPP TS (technical specification) 38.213 of Table 5 described above. However, when a PUCCH repetition transmission is considered in addition to the existing single PUCCH transmission, there is a disadvantage that time/frequency domains used for the single PUCCH transmission shall also be shared by the PUCCH repetition transmission unless a special condition is added. That is, when a base station allocates PUCCH resources for UEs existing in a corresponding cell, TDM shall be performed at a slot level or CDM shall be performed within the same slot. However, if the number of UEs performing the PUCCH repetition transmission increases and the number of repetition transmissions also increases, there may be a shortage of resources.

Accordingly, as a method for solving this, it may be configured so that resources for the PUCCH repetition transmission can be allocated independently from resources for the PUCCH single transmission, and it may be considered that the base station simply independently configures/indicates time resources and/or frequency resources. Characteristically, a method of configuring time resources and a method of configuring frequency resources may be separately configured based on a PUCCH format combination or a repetition number, and it may also be considered that two or more methods are simultaneously applied. In addition, regardless of whether the PUCCH repetition transmission is applied in any manner including a slot level repetition, a symbol level repetition, slot + symbol level repetition, etc., it can be applied in combination with methods proposed in the present disclosure.

The method proposed in the present disclosure is an operation that the base station can additionally configure/indicate. If the base station does not provide the corresponding information to the UE, the UE may be configured to perform PUCCH single/repetition transmission by selecting time/frequency resources based on the legacy operation.

## 1.1 Method of configuring time resource

A PUCCH resource set that a UE uses before receiving dedicated PUCCH resources is defined in Table 9.2.1-1 of 3GPP TS (technical specification) 38.213 spec of Table 5 described above, and in terms of time resources, a starting OFDM symbol index is defined for each PUCCH format combination for single PUCCH transmission. In this instance, the starting OFDM symbol index may be defined to be used as before for PUCCH single transmission, and a method of defining a new starting OFDM symbol index (and/or available PUCCH slot) for each PUCCH format combination and/or each repetition number for PUCCH repetition transmission may be additionally considered. In this instance, the new starting OFDM symbol index (and/or available PUCCH slot), etc. may be pre-defined in the 3GPP specification, or may be configured so that the base station can indicate it via a specific signal/channel, etc.

That is, a UE performing the single PUCCH transmission may be configured to perform PUCCH transmission at the starting OFDM symbol index defined in Table 9.2.1-1 of 3GPP TS (technical specification) 38.213 of Table 5 described above, and a UE performing the PUCCH repetition transmission may be configured to perform PUCCH transmission at a newly defined starting OFDM symbol index (and/or available PUCCH slot). Characteristically, the proposed method considers that one PUCCH is transmitted per specific slot for the PUCCH repetition transmission, and considers a form in which the PUCCH is repeatedly transmitted across multiple slots when the repetition number is greater than or equal to 2. If the single PUCCH transmission occupies most of a single UL slot (e.g., PF1 with 10 or 14 OFDM symbols), a method in which a slot interval during which repetition is performed is set/defined based on the repetition number (or based on the total number of repetition numbers) may also be considered.

This method has the advantage of being able to use independent PUCCH resources for each repetition number through TDM when repetition numbers are configured/indicated differently between UEs using the same PUCCH format.

## 1.2 Method of configuring frequency resource

A PUCCH resource set that a UE uses before receiving dedicated PUCCH resources is defined in Table 9.2.1-1 of 3GPP TS (technical specification) 38.213 of Table 5 described above, and PRB offset (i.e., $RB_{BWP}^{offset}$) value is provided in terms of frequency resources. The PRB offset value is applied commonly (i.e., cell-specifically) to all UEs within a specific cell for a single PUCCH transmission. In addition, a method may be considered to configure the PRB offset differently and/or not to overlap each other for each repetition number based on a value (or the number) of sets of initial CS indexes configured for each PUCCH resource set index.

In the simplest method, when the number of sets of initial CS indexes is K, PRB offset ($RB_{BWP}^{offset\_N}$) value to be applied based on values of the PUCCH repetition number N may be defined as in Equation 1. That is, if the repetition number is 1, the PRB offset may be legacy PRB offset value (i.e., $RB_{BWP}^{offset}$); if the repetition number N is 2, PRB offset ($RB_{BWP}^{offset\_N}$) may be $RB_{BWP}^{offset} + \lceil 8/K \rceil$; if the repetition number N is 4, PRB offset ($RB_{BWP}^{offset\_N}$) may be $RB_{BWP}^{offset} + 2\lceil 8/K \rceil$; and if the repetition number N is 8, PRB offset ($RB_{BWP}^{offset\_N}$) may be $RB_{BWP}^{offset} + 3\lceil 8/K \rceil$.

【Equation 1】

$$RB_{BWP}^{offset\_N} = RB_{BWP}^{offset} + \log_2 N \times \lceil 8/K \rceil$$

To explain with a specific example in the Equation 1, when the value of the sets of initial CS indexes is {0, 3} or {0, 6} (i.e., when the total number K of the sets of initial CS indexes is 2), the PUCCH resources required in a frequency axis are 4 RBs (i.e., $\lceil 8/2 \rceil = 4$) for each of a first hop and a second hop. Therefore, if the repetition number is 1, the PRB offset may be legacy PRB offset value (i.e., $RB_{BWP}^{offset} = 0$); if the repetition number N is 2, the PRB offset may be $RB_{BWP}^{offset} + \lceil 8/K \rceil = 4$; if the repetition number N is 4, the PRB offset may be $RB_{BWP}^{offset} + 2\lceil 8/K \rceil = 8$; and if the repetition number N is 8, the PRB offset may be $RB_{BWP}^{offset} + 3\lceil 8/K \rceil = 12$.

For another example, when the value of the sets of initial CS indexes is {0, 4, 8} (i.e., when the total number K of the sets of initial CS indexes is 3), the PUCCH resources required in the frequency axis are 3 RBs (i.e., $\lceil 8/3 \rceil = 3$) for each of a first hop and a second hop. Therefore, if the repetition number is 1, the PRB offset may be legacy PRB offset value (i.e., if index 2 of Table 9.2.1-1 is indicated, $RB_{BWP}^{offset} = 3$); if the repetition number N is 2, the PRB offset may be $RB_{BWP}^{offset} + \lceil 8/K \rceil = 6$; if the repetition number N is 4, the PRB offset may be $RB_{BWP}^{offset} + 2\lceil 8/K \rceil = 9$; and if the repetition number N is 8, the PRB offset may be $RB_{BWP}^{offset} + 3\lceil 8/K \rceil = 12$.

For another example, when the value of the sets of initial CS indexes is {0, 3, 6, 9} (i.e., when the total number K of the sets of initial CS indexes is 4), the PUCCH resources required in the frequency axis are 2 RBs (i.e., $\lceil 8/4 \rceil = 2$) for each of a first hop and a second hop. Therefore, if the repetition number is 1, the PRB offset may be legacy PRB offset value (i.e., if index 14 of Table 9.2.1-1 is indicated, $RB_{BWP}^{offset} = 4$); if the repetition number N is 2, the PRB offset may be $RB_{BWP}^{offset} + \lceil 8/K \rceil = 6$; if the repetition number N is 4, the PRB offset may be $RB_{BWP}^{offset} + 2\lceil 8/K \rceil = 8$; and if the repetition number N is 8, the PRB offset may be $RB_{BWP}^{offset} + 3\lceil 8/K \rceil = 10$.

In another method, a method for reducing inter-cell interference may be considered, which may be defined by multiplying the [8/K] value of the Equation 1 by an integer (e.g., L). In this instance, the integer L may be 2 and/or 3, etc., and this value may be set/indicated by the base station or may be predefined. As one of methods of predefining this value, the L value may be determined based on the number of indexes to which the same PUCCH format and CS indexes are applied with different PRB offsets in Table 9.2.1-1 of 3GPP TS (technical specification) 38.213 of Table 5 described above. For example, when index 1 or 2, etc. of Table 9.2.1-1 of 3GPP TS (technical specification) 38.213 of Table 5 described above is used, the L value may be set to 2. For another example, when indexes 4, 5, 6, or 8, 9, 10, or 12, 13, 14, etc. are used, the L value may be set to 3. As a result, if this method is expressed as a formula, it may be as shown in Equation 2.

【Equation 2】

$$RB_{BWP}^{offset\_N} = RB_{BWP}^{offset} + \log_2 N \times L \times \lceil 8/K \rceil$$

In another method, a method for the base station to configure/indicate PRB offset ($RB_{BWP}^{offset\_N}$) value to be applied based on values of the PUCCH repetition number N via higher layer signaling (e.g., SIB, etc.) may be considered. For example, the base station may configure/indicate ($RB_{BWP}^{offset\_N}$) value of the Equation 1 for each repetition number via higher layer signaling (e.g., SIB, etc.). For another example, the base station may configure/indicate ($RB_{Repetition}^{offset}$) value instead of $\lceil 8/K \rceil$ value of the Equation 1 via higher layer signaling (e.g., SIB, etc.) so that the UE can calculate $RB_{BWP}^{offset\_N}$ value for each repetition number. If this is expressed as a formula, it may be as shown in Equation 3.

【Equation 3】

$$RB_{BWP}^{offset\_N} = RB_{BWP}^{offset} + \log_2 N \times RB_{Repetition}^{offset}$$

When the PRB offset ($RB_{BWP}^{offset\_N}$) to be applied is defined based on the PUCCH repetition number N value through the methods proposed above, the UE may calculate in which PRB a first hop and/or a second hop should be located by applying the corresponding PRB offset value and may transmit the PUCCH to the corresponding PRB location. That is, the UE performing the PUCCH repetition may calculate the PRB location to actually transmit the PUCCH by substituting $RB_{BWP}^{offset}$ value into $RB_{BWP}^{offset\_N}$ value in the following Equation defined in clause 9.2.1 of the existing 3GPP TS 38.213.

---

If $\lfloor r_{PUCCH}/8 \rfloor = 0$ and a UE is provided a PUCCH resource by *pucch-ResourceCommon* and is not provided *useInterlacePUCCH-PUSCH* in *BWP-UplinkCommon*

- the UE determines the lowest PRB index of the PUCCH transmission in the first hop as $RB_{BWP}^{offset} \cdot N_{RB} + \lfloor r_{PUCCH}/N_{CS} \rfloor \cdot N_{RB}$ and the lowest PRB index of the PUCCH transmission in the second hop as $N_{BWP}^{size} - RB_{BWP}^{offset} \cdot N_{RB} - (1 + \lfloor r_{PUCCH}/N_{CS} \rfloor) \cdot N_{RB}$, where $N_{CS}$ is the total number of initial cyclic shift indexes in the set of initial cyclic shift indexes

(continued)

> - the UE determines the initial cyclic shift index in the set of initial cyclic shift indexes as $r_{\text{PUCCH}} \bmod N_{\text{CS}}$
>
> If $\lfloor r_{\text{PUCCH}}/8 \rfloor = 1$ and a UE is provided a PUCCH resource by *pucch-ResourceCommon* and is not provided *useInterlacePUCCH-PUSCH* in *BWP-UplinkCommon*
>
> $$RB_{\text{BWP}}^{\text{offset}} \cdot N_{RB} + \lfloor (r_{\text{PUCCH}} - 8)/N_{\text{CS}} \rfloor \cdot N_{RB}$$
>
> - the UE determines the lowest PRB index of the PUCCH transmission in the first hop as $N_{\text{BWP}}^{\text{size}} - RB_{\text{BWP}}^{\text{offset}} \cdot N_{RB} -$
>
> $(1 + \lfloor (r_{\text{PUCCH}} - 8)/N_{\text{CS}} \rfloor) \cdot N_{RB}$ and the lowest PRB index of the PUCCH transmission in the second hop as
>
> - the UE determines the initial cyclic shift index in the set of initial cyclic shift indexes as $(r_{\text{PUCCH}}\text{-}8) \bmod N_{\text{CS}}$

If configured in this way, when the PUCCH repetition number is different between multiple UEs within a specific cell, each PUCCH resource based on the repetition number may be distinguished in the form of FDM, which has the advantage of reducing delay from a perspective of UE transmission, and can also be advantageous in terms of resource utilization of the base station.

In another method, a method of configuring/indicating, via higher layer signaling (e.g., SIB, etc.), PRB offset (e.g., $RB_{BWP}^{offset\_N}$) value to be applied to remaining repetition numbers N (e.g., N=2, 4, 8) excluding 1 from the PUCCH repetition numbers that the base station configures/indicates via higher layer signaling (e.g., SIB, etc.) may be considered. For example, $RB_{BWP}^{offset\_N}$ value of the Equation 3 may be configured/indicated for each repetition number configured and indicted by the base station via higher layer signaling (e.g., SIB, etc.). If the base station indicates {1, 4, 8} as the repetition number via higher layer signaling (e.g., SIB, etc.), the base station may configure/indicate each of $RB_{BWP}^{offset\_4}$ and $RB_{BWP}^{offset\_8}$ via higher layer signaling (e.g., SIB, etc.). Then, when the UE performs a PUCCH repetition transmission, if the repetition number N is 4, $RB_{BWP}^{offset\_4}$ instead of legacy PRB offset ($RB_{BWP}^{offset}$) (or in addition to the legacy PRB offset ($RB_{BWP}^{offset}$)) may be applied as the PRB offset, and if the repetition number N is 8, $RB_{BWP}^{offset\_8}$ instead of legacy PRB offset ($RB_{BWP}^{offset}$) (or in addition to the legacy PRB offset ($RB_{BWP}^{offset}$)) may be applied as the PRB offset.

In addition, a method for the base station to configure/indicate one additional PRB offset (e.g., $RB_{BWP}^{offset\_Repetition}$) regardless of the PUCCH repetition number value via higher layer signaling (e.g., SIB, etc.) may be considered. For example, if the base station configures/indicates one additional PRB offset (e.g., $RB_{BWP}^{offset\_Repetition}$), when the UE performs repetition while transmitting a common PUCCH, the UE may be configured to apply the additional PRB offset (e.g., $RB_{BWP}^{offset\_Repetition}$) instead of legacy PRB offset ($RB_{BWP}^{offset}$) (or in addition to the legacy PRB offset($RB_{BWP}^{offset}$)) regardless of a repetition factor value and perform the PUCCH repetition. If the base station does not indicate the additional PRB offset, the UE may be defined to set the corresponding value to 0.

For another example, when the base station configures/indicates one additional PRB offset (e.g., $RB_{BWP}^{offset\_Repetition}$) and configures/indicates all the repetition factors including one or more repetition factors among 2 and/or 4 and/or 8 via higher layer signaling (e.g., SIB, etc.), the UE may be configured to (additionally) apply a PRB offset of the size of the additional PRB offset (e.g., $RB_{BWP}^{offset\_Repetition}$) applied n times based on ascending order (or descending order) of the repetition factors (excluding 1). In this case, n represents an n-th repetition factor when the repetition factors (excluding 1) are listed in ascending order (or descending order) among multiple repetition factors indicated by the base station. For example, if the base station configures/indicates the repetition factors of {1, 4, 8} via higher layer signaling (e.g., SIB, etc.) for common PUCCH repetition, when the UE transmits the PUCCH using repetition factor 1, the UE may be defined to transmit the PUCCH using the legacy PRB offset ($RB_{BWP}^{offset}$) (as in the existing operation). Further, when the UE transmits the PUCCH using repetition factor 4, the UE may be defined to apply additional PRB offset (e.g., $RB_{BWP}^{offset\_Repetition}$) value once instead of legacy PRB offset (e.g., $RB_{BWP}^{offset}$) (or in addition to the legacy PRB offset ($RB_{BWP}^{offset}$)) and perform the PUCCH repetition. Further, when the UE transmits the PUCCH using repetition factor 8, the UE may be defined to apply additional PRB offset (e.g., $RB_{BWP}^{offset\_Repetition}$) value two times (e.g., $2 \times RB_{BWP}^{offset\_Repetition}$) instead of legacy PRB offset ($RB_{BWP}^{offset}$) (or in addition to the legacy PRB offset ($RB_{BWP}^{offset}$)) and perform the PUCCH repetition. The additional PRB offset (e.g., $RB_{BWP}^{offset\_Repetition}$) proposed above may be provided to the UE by the base station via PUCCH-ConfigCommon, and if the additional PRB offset (e.g., $RB_{BWP}^{offset\_Repetition}$) is not provided by the base station, the UE may be defined to set the corresponding value to 0.

An example of a method of applying the additional PRB offset n times in addition to the legacy PRB offset may be expressed as follows when applied to the 3GPP TS 38.213 specification.

---

If $\lfloor r_{\text{PUCCH}}/8 \rfloor = 0$ and a UE is provided a PUCCH resource by *pucch-ResourceCommon* and is not provided *useInterlacePUCCH-PUSCH* in *BWP-UplinkCommon*

- the UE determines the lowest PRB index of the PUCCH transmission in the first hop as $(RB_{\text{BWP}}^{\text{offset}} + \text{n} \times RB_{\text{BWP}}^{\text{offset\_Repetition}}) \cdot N_{RB} + \lfloor r_{\text{PUCCH}}/N_{\text{CS}} \rfloor \cdot N_{RB}$ and the lowest PRB index of the PUCCH transmission in the second hop as $N_{\text{BWP}}^{\text{size}} - (RB_{\text{BWP}}^{\text{offset}} + \text{n} \times RB_{\text{BWP}}^{\text{offset\_Repetition}}) \cdot N_{RB} - (1 + \lfloor r_{\text{PUCCH}}/N_{\text{CS}} \rfloor) \cdot N_{RB}$, where $N_{\text{CS}}$ is the total number of initial cyclic shift indexes in the set of initial cyclic shift indexes, and n is n$^{\text{th}}$ value of *numberOf-PUCCHforMsg4HARQACK-RepetitionsList* except 1, and $RB_{\text{BWP}}^{\text{offset\_Repetition}}$ is a PRB offset for PUCCH repetition which can be provided in *PUCCH-ConfigCommon;* otherwise, $RB_{\text{BWP}}^{\text{offset\_Repetition}} = 0$

- the UE determines the initial cyclic shift index in the set of initial cyclic shift indexes as $r_{\text{PUCCH}} \text{mod} N_{\text{CS}}$

If $\lfloor r_{\text{PUCCH}}/8 \rfloor = 1$ and a UE is provided a PUCCH resource by *pucch-ResourceCommon* and is not provided *useInterlacePUCCH-PUSCH* in *BWP-UplinkCommon*

- the UE determines the lowest PRB index of the PUCCH transmission in the first hop as $N_{\text{BWP}}^{\text{size}} - (RB_{\text{BWP}}^{\text{offset}} + \text{n} \times RB_{\text{BWP}}^{\text{offset\_Repetition}}) \cdot N_{RB} - (1 + \lfloor (r_{\text{PUCCH}} - 8)/N_{\text{CS}} \rfloor) \cdot N_{RB}$ and the lowest PRB index of the PUCCH transmission in the second hop as $(RB_{\text{BWP}}^{\text{offset}} + \text{n} \times RB_{\text{BWP}}^{\text{offset\_Repetition}}) \cdot N_{RB} + \lfloor (r_{\text{PUCCH}} - 8)/N_{\text{CS}} \rfloor \cdot N_{RB}$

- the UE determines the initial cyclic shift index in the set of initial cyclic shift indexes as $(r_{\text{PUCCH}}\text{-}8)\text{mod} N_{\text{CS}}$

---

## 2. Method of applying different PRB offsets during PUCCH repetition transmission

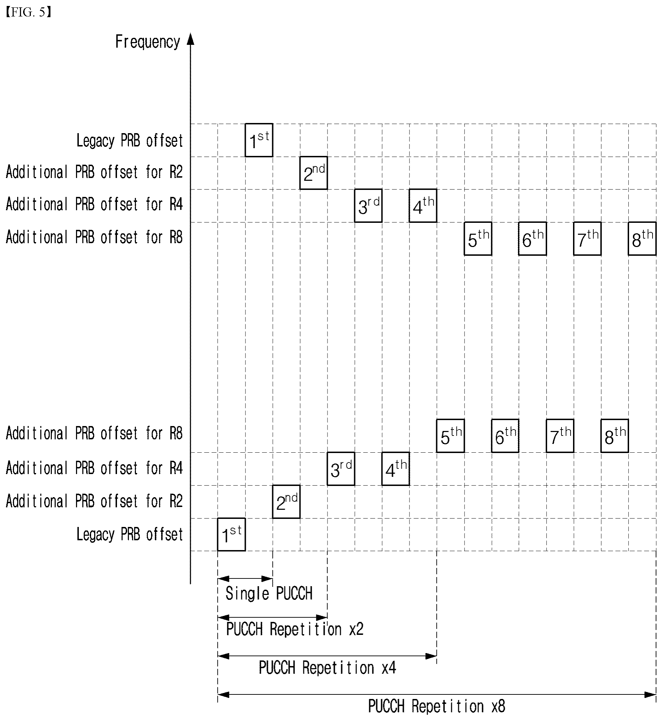

FIG. 5 illustrates an example of applying an additional PRB offset in a system applicable to the present disclosure.

Additionally, a method may be considered in which an additional PRB offset is configured/determined based on a repetition factor, and the UE performs a PUCCH repetition transmission by applying the additional PRB offset from a specific k-th transmission. For example, as illustrated in FIG. 5, the UE may apply the legacy PRB offset to every first PUCCH transmission regardless of the repetition factor, and when the repetition factor is 2, the UE may apply an additional PRB offset for repetition factor 2 from a second PUCCH transmission. In addition, when the repetition factor is 4, the UE may apply the additional PRB offset for repetition factor 2 to the second PUCCH transmission and may apply an additional PRB offset for repetition factor 4 from a third PUCCH transmission to a fourth PUCCH transmission. When the repetition factor is 8, the UE may apply the additional PRB offset for repetition factor 2 to the second PUCCH transmission, may apply the additional PRB offset for repetition factor 4 from the third PUCCH transmission to the fourth PUCCH transmission, and may apply an additional PRB offset for repetition factor 8 from a fifth PUCCH transmission to an eighth PUCCH transmission.

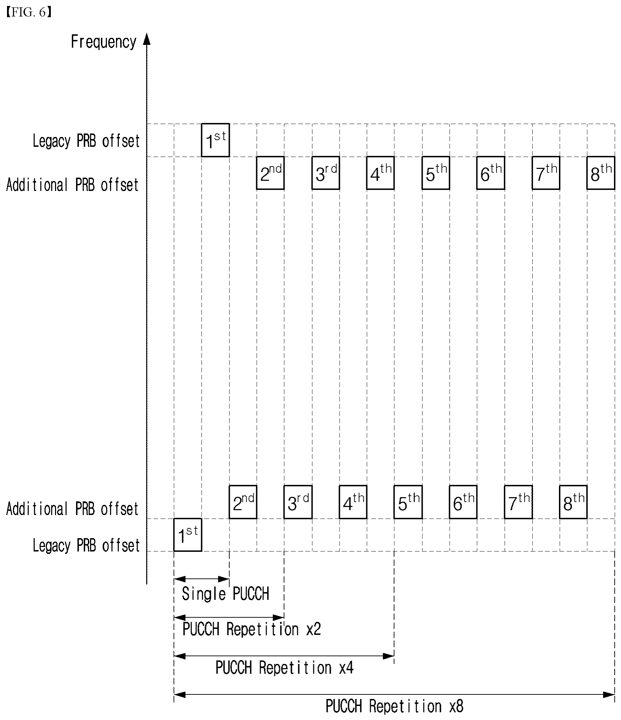

FIG. 6 illustrates an example of applying an additional PRB offset in a system applicable to the present disclosure.

For another example, as illustrated in FIG. 6, if the additional PRB offset is configured/determined regardless of the repetition factor, the UE may define to apply the legacy PRB offset to every first PUCCH transmission regardless of the repetition factor, and to apply the additional PRB offset to the following PUCCH transmissions from the second PUCCH transmission when the repetition factor is 2, 4, or 8.

## 3. Additional initial UL BWP

A method of additionally configuring an initial UL BWP for common PUCCH repetition transmission may be considered. That is, the existing initial UL BWP may be used for legacy PUCCH transmission, and an additional initial UL BWP may be configured for the common PUCCH repetition transmission, so that the UE performs the common PUCCH repetition transmission in the additional initial UL BWP.

In addition, if the additional initial UL BWP is configured/indicated, the base station may configure/indicate a new PRB offset value instead of a PRB offset value used for the legacy PUCCH transmission, or may be configured to apply a different value by scaling a PRB offset value pre-defined in the 3GPP specification by K times (e.g., 2 times or 1/2 times). As above, in the methods in which the base station provides the additional PRB offset, it may be defined to apply the additional PRB offset value when the additional initial UL BWP is configured/indicated, and to apply the legacy PRB offset value when the additional initial UL BWP is not configured/indicated.

When defined in this way, the UE may be configured to use the additional initial UL BWP only for a specific purpose (e.g., performing the common PUCCH repetition transmission). Or, when the UE increases a repetition transmission capability for common PUCCH via higher layer signaling of Msg3 PUSCH, the UE may be configured to transmit UL signals/channels (e.g., Msg4 HARQ-ACK PUCCH, Msg5 PUSCH, etc.) (until a state of the UE is switched to RRC connected state) configured/indicated by the base station through the additional initial UL BWP.

#### 4. Dynamic indication

However, if the additional PRB offset is applied to UEs for coverage enhancement through a semi-static method, PUCCH resources cannot be pushed to an edge of a band width part even when there are no other UEs using existing PUCCH resources (i.e., using the legacy PRB offset), making it difficult to perform continuous resource allocation in the PUSCH resource allocation of the base station. In other words, dynamic signaling may be required to use the additional PRB offset only when the base station has a shortage of PUCCH resources using the legacy PRB offset, and not to use the additional PRB offset when the base station does not have a shortage of PUCCH resources using the legacy PRB offset.

Therefore, whether the additional PRB offset is enabled/disabled is configured by higher layer signaling (e.g., SIB, etc.), but whether to actually apply it to the common PUCCH repetition transmission may be dynamically indicated by the base station. Characteristically, it may be defined so that the base station indicates whether to apply the additional PRB offset through RAR MAC CE. As a result, if the base station indicates to apply the additional PRB offset for the common PUCCH repetition transmission through the RAR MAC CE in a state in which the additional PRB offset for the common PUCCH repetition transmission is enabled via higher layer signaling (e.g., SIB, etc.), the UE may be defined to apply the additional PRB offset when performing the common PUCCH repetition transmission. Otherwise, if the base station indicates not to apply additional PRB offset for the common PUCCH repetition transmission through the RAR MAC CE, the UE may be defined to apply legacy PRB offset when performing the common PUCCH repetition transmission.

Or, the base station may configure whether to enable/disable the additional PRB offset and/or multiple PRB offsets via higher layer signaling (e.g., SIB, etc.), and may dynamically configure/indicate which PRB offset among the multiple PRB offsets is actually applied along with whether to apply the additional PRB offset via DCI (e.g., DCI format 1_0 with TC-RNTI) and/or RAR MAC CE for scheduling Msg4 PDSCH. The UE may be defined to perform the common PUCCH repetition transmission by selecting the additional PRB offset value configured/indicated by the base station among the multiple additional PRB offsets.

Or, the dynamic signaling may be applied to the method proposed in the embodiments of FIGS. 5 and 6, and thus the base station may configure/indicate whether to apply a specific additional PRB offset from a specific k-th transmission via DCI (e.g., DCI format 1_0 with TC-RNTI) and/or RAR MAC CE for scheduling Msg4 PDSCH. That is, if the base station configures/indicates to apply the specific additional PRB offset from the specific k-th transmission through the dynamic signaling, the UE may be defined to operate as in the embodiments of FIGS. 5 and 6. If the base station configures/indicates not to apply the specific additional PRB offset from the specific k-th transmission through the dynamic signaling, the UE may be defined to perform the PUCCH repetition transmission using the legacy PRB offset.

In another method, the base station may configure/indicate the additional PRB offset value via higher layer signaling (e.g., SIB, etc.) and may apply the additional PRB offset to only some of 16 $r_{PUCCH}$ values. For example, it may be configured not to apply the additional PRB offset and to apply only the legacy PRB offset to $r_{PUCCH}$ values 0 to 7 (or $r_{PUCCH}$ values 8 to 15) and configured to apply the additional PRB offset to the $r_{PUCCH}$ values 8 to 15 (or the $r_{PUCCH}$ values 0 to 7). For another example, if the $r_{PUCCH}$ value is an even number (or if the $r_{PUCCH}$ value is an odd number), it may be configured not to apply the additional PRB offset and to apply only the legacy PRB offset to it. If the $r_{PUCCH}$ value is an odd number (or if the $r_{PUCCH}$ value is an even number), it may be configured to apply the additional PRB offset (in addition to the legacy PRB offset) to it. After configuring as above, when the base station transmits DCI format 1_0 scheduling Msg4 PDSCH, an appropriate PRI (PUCCH resource indicator) value and/or an appropriate CCE index may be configured/indicated. That is, the base station may select whether to apply the additional PRB offset suitable for a current UL resource situation and indicate PUCCH resources. The UE may determine whether to apply the additional PRB offset based on the $r_{PUCCH}$ values configured/indicated by the base station, and may perform the PUCCH repetition transmission by applying (or not applying) the additional PRB offset in consideration of this.

The proposed methods can be configured/applied to other UL signals/channels such as PRACH/PUSCH/PUCCH. Since examples of the proposed methods described above can also be included as one of the implementation methods of the present disclosure, it is obvious that they can be considered as a kind of proposed methods. In addition, the proposed methods described above can be implemented independently, but can also be implemented in the form of a combination (or merge) of some proposed methods. Information on whether the proposed methods are applied (or information on rules of the proposed methods) may be defined as a rule so that the base station informs the UE via a predefined signal (e.g., a physical layer signal or a higher layer signal). For example, the higher layer may include one or more of functional layers such as MAC, RLC, PDCP, RRC, and SDAP.

Methods, embodiments, or descriptions for implementing the methods proposed in the present disclosure can be applied separately, or one or more methods (or embodiments or descriptions) can be applied in combination.

**[Description of claims related to UE]**

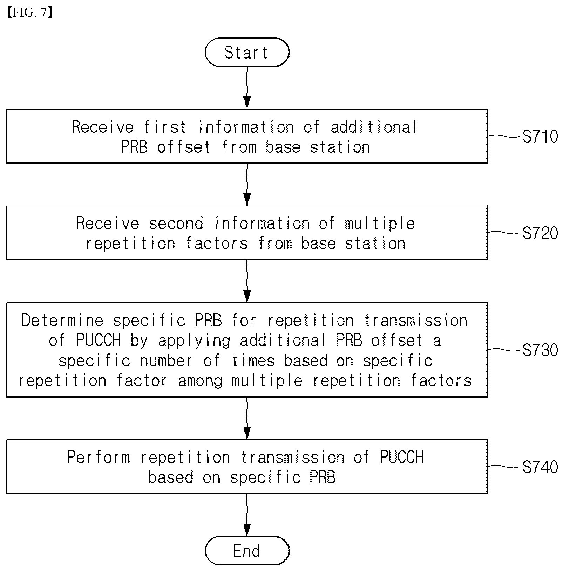

Below, the above-described embodiments are described in detail from a perspective of an operation of a UE with reference to FIG. 7. Methods to be described below are merely distinguished for convenience of explanation. Thus, as long as the methods are not mutually exclusive, it is obvious that partial configuration of any method can be substituted or combined with partial configuration of another method.

FIG. 7 illustrates an example of an operation process of a UE in a system applicable to the present disclosure.

In step S710, a user equipment (UE) receives first information of an additional physical resource block (PRB) offset from a base station.

In step S720, the UE receives second information of multiple repetition factors from the base station.

In step S730, the UE determines a specific PRB for a repetition transmission of a physical uplink control channel (PUCCH) by applying the additional PRB offset a specific number of times based on a specific repetition factor among the multiple repetition factors.

In step S740, the UE performs the repetition transmission of the PUCCH based on the specific PRB.

According to various embodiments of the present disclosure, the specific repetition factor may correspond to an n-th repetition factor among remaining repetition factors excluding 1 from the multiple repetition factors.

According to various embodiments of the present disclosure, the specific repetition factor may correspond to an n-th repetition factor among remaining repetition factors excluding 1 from the multiple repetition factors sorted in ascending order or descending order.

According to various embodiments of the present disclosure, the specific PRB may be determined by applying the additional PRB offset n times in addition to a configured initial PRB offset.

According to various embodiments of the present disclosure, the PUCCH may be related to message 4 (Msg4) for hybrid automatic repeat request-acknowledgement (HARQ-ACK).

According to various embodiments of the present disclosure, the first information may be related to PUCCH-ConfigCommon.

According to various embodiments of the present disclosure, if the additional PRB offset is not provided through the first information, the additional PRB offset may be configured to 0.

According to various embodiments of the present disclosure, there is provided a user equipment (UE) in a wireless communication system. The UE may include a transceiver and at least one processor, and the at least one processor may be configured to perform the operation method of the UE based on FIG. 7.

According to various embodiments of the present disclosure, there is provided a device controlling a user equipment (UE) in a wireless communication system. The device may include at least one processor and at least one memory operably connected to the at least one processor. The at least one memory may be configured to store instructions performing the operation method of the UE based on FIG. 7 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the UE based on FIG. 7.

**[Description of claims related to BS]**

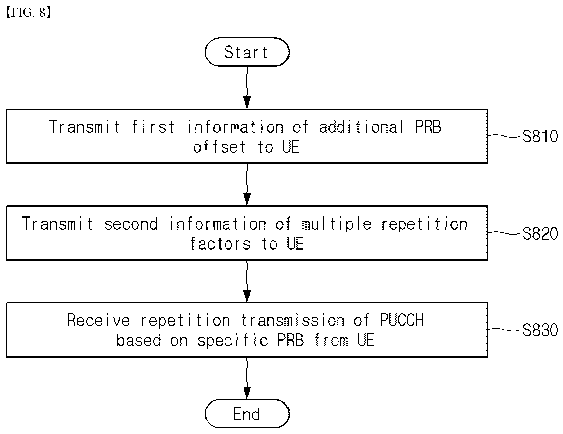

Below, the above-described embodiments are described in detail from a perspective of an operation of a base station with reference to FIG. 8. Methods to be described below are merely distinguished for convenience of explanation. Thus, as long as the methods are not mutually exclusive, it is obvious that partial configuration of any method can be substituted or combined with partial configuration of another method.

FIG. 8 illustrates an example of an operation process of a base station in a system applicable to the present disclosure.

In step S810, a base station transmits first information of an additional physical resource block (PRB) offset to a user equipment (UE).

In step S820, the base station transmits second information of multiple repetition factors to the UE.

In step S830, the base station receives, from the UE, a repetition transmission of a physical uplink control channel (PUCCH) based on a specific PRB.

The specific PRB for the repetition transmission of the PUCCH is determined by applying the additional PRB offset a specific number of times based on a specific repetition factor among the multiple repetition factors.

According to various embodiments of the present disclosure, the specific repetition factor may correspond to an n-th repetition factor among remaining repetition factors excluding 1 from the multiple repetition factors.

According to various embodiments of the present disclosure, the specific repetition factor may correspond to an n-th repetition factor among remaining repetition factors excluding 1 from the multiple repetition factors sorted in ascending order or descending order.

According to various embodiments of the present disclosure, the specific PRB may be determined by applying the additional PRB offset n times in addition to a configured initial PRB offset.

According to various embodiments of the present disclosure, the PUCCH may be related to message 4 (Msg4) for hybrid automatic repeat request-acknowledgement (HARQ-ACK).

According to various embodiments of the present disclosure, the first information may be related to PUCCH-ConfigCommon.

According to various embodiments of the present disclosure, if the additional PRB offset is not provided through the first information, the additional PRB offset may be configured to 0.

According to various embodiments of the present disclosure, there is provided a base station in a wireless communication system. The base station may include a transceiver and at least one processor, and the at least one processor may be configured to perform the operation method of the BS based on FIG. 8.

According to various embodiments of the present disclosure, there is provided a device controlling a base station in a wireless communication system. The device may include at least one processor and at least one memory operably connected to the at least one processor. The at least one memory may be configured to store instructions performing the operation method of the BS based on FIG. 8 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the BS based on FIG. 8.

## Wireless device applicable to the present disclosure

Examples of wireless devices to which various embodiments of the present disclosure are applied are described below.

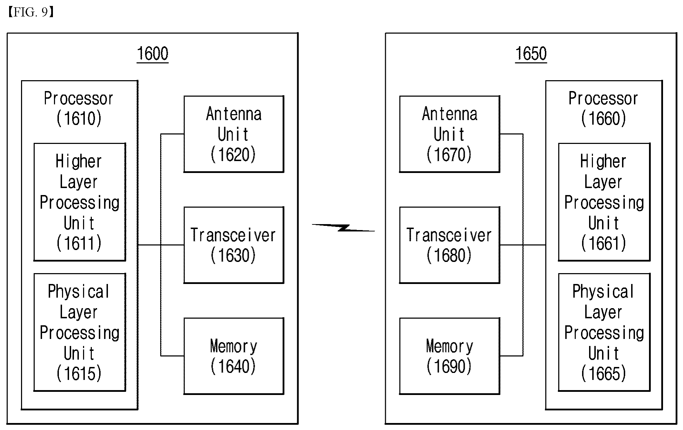

FIG. 9 illustrates an example of a structure of a first device and a second device in a system applicable to the present disclosure.

A first device 1600 may include a processor 1610, an antenna unit 1620, a transceiver 1630, and a memory 1640.

The processor 1610 may perform baseband-related signal processing and include a higher layer processing unit 1611 and a physical layer processing unit 1615. The higher layer processing unit 1611 may process operations of the MAC layer, the RRC layer, or higher layers. The physical layer processing unit 1615 may process the operation of the PHY layer. For example, if the first device 1600 is a base station (BS) device in BS-UE communication, the physical layer processing unit 1615 may perform uplink reception signal processing, downlink transmission signal processing, and the like. For example, if the first device 1600 is a first UE device in inter-UE communication, the physical layer processing unit 1615 may performs downlink reception signal processing, uplink transmission signal processing, sidelink transmission signal processing, and the like. The processor 1610 may control the overall operation of the first device 1600 in addition to performing the baseband-related signal processing.

The antenna unit 1620 may include one or more physical antennas and support MIMO transmission/reception if the antenna unit 1620 includes a plurality of antennas. The transceiver 1630 may include a radio frequency (RF) transmitter and an RF receiver. The memory 1640 may store information processed by the processor 1610 and software, operating systems, and applications related to the operation of the first device 1600. The memory 1640 may also include components such as a buffer.

The processor 1610 of the first device 1600 may be configured to implement the operation of the BS in the BS-UE communication (or the operation of the first UE device in the inter-UE communication) in embodiments described in the present disclosure.

The second device 1650 may include a processor 1660, an antenna unit 1670, a transceiver 1680, and a memory 1690.

The processor 1660 may perform baseband-related signal processing and include a higher layer processing unit 1661 and a physical layer processing unit 1665. The higher layer processing unit 1661 may process the operation of the MAC layer, the RRC layer, or higher layers. The physical layer processing unit 1665 may process the operation of the PHY layer. For example, if the second device 1650 is a UE device in BS-UE communication, the physical layer processing unit 1665 may perform downlink reception signal processing, uplink transmission signal processing, and the like. For example, if the second device 1650 is a second UE device in inter-UE communication, the physical layer processing unit 1665 may perform downlink reception signal processing, uplink transmission signal processing, sidelink reception signal processing, and the like. The processor 1660 may control the overall operation of the second device 1660 in addition to performing the baseband-related signal processing.

The antenna unit 1670 may include one or more physical antennas and support MIMO transmission/reception if the antenna unit 1670 includes a plurality of antennas. The transceiver 1680 may include an RF transmitter and an RF receiver. The memory 1690 may store information processed by the processor 1660 and software, operating systems, and applications related to the operation of the second device 1650. The memory 1690 may also include components such as a buffer.

The processor 1660 of the second device 1650 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 1600 and the second device 1650, and redundant descriptions are omitted.

Wireless communication technologies implemented in the devices 1600 and 1650 according to the present disclosure may include LTE, NR, and 6G, as well as various other wireless communication technologies.

The claims described in various embodiments of the present disclosure can be combined in various ways. For example, technical features of the method claims of various embodiments of the present disclosure can be combined and implemented as a device, and technical features of the device claims of various embodiments of the present disclosure can be combined and implemented as a method. In addition, the technical features of the method claims and the technical features of the device claims in various embodiments of the present disclosure can be combined and implemented as a device, and the technical features of the method claims and the technical features of the device claims in various embodiments of the present disclosure can be combined and implemented as a method.

**Claims**

1. A method of operating a user equipment (UE) in a wireless communication system, the method comprising:

    receiving first information of an additional physical resource block (PRB) offset from a base station;
    receiving second information of multiple repetition factors from the base station;
    determining a specific PRB for a repetition transmission of a physical uplink control channel (PUCCH) by applying the additional PRB offset a specific number of times based on a specific repetition factor among the multiple repetition factors; and
    performing the repetition transmission of the PUCCH based on the specific PRB.

2. The method of claim 1, wherein the specific repetition factor is related to an n-th repetition factor among remaining repetition factors excluding 1 from the multiple repetition factors.

3. The method of claim 2, wherein the specific repetition factor is related to an n-th repetition factor among remaining repetition factors excluding 1 from the multiple repetition factors sorted in ascending order or descending order.

4. The method of claim 3, wherein the specific PRB is determined by applying the additional PRB offset n times in addition to a configured initial PRB offset.

5. The method of claim 1, wherein the PUCCH is related to message 4 (Msg4) for hybrid automatic repeat request-acknowledgement (HARQ-ACK).

6. The method of claim 1, wherein the first information is related to PUCCH-ConfigCommon.

7. The method of claim 1, wherein based on the additional PRB offset being not provided through the first information, the additional PRB offset is configured to 0.

8. A method of operating a base station in a wireless communication system, the method comprising:

    transmitting first information of an additional physical resource block (PRB) offset to a user equipment (UE);

transmitting second information of multiple repetition factors to the UE; and

receiving, from the UE, a repetition transmission of a physical uplink control channel (PUCCH) based on a specific PRB,

wherein the specific PRB for the repetition transmission of the PUCCH is determined by applying the additional PRB offset a specific number of times based on a specific repetition factor among the multiple repetition factors.

9. The method of claim 8, wherein the specific repetition factor is related to an n-th repetition factor among remaining repetition factors excluding 1 from the multiple repetition factors.

10. The method of claim 9, wherein the specific repetition factor is related to an n-th repetition factor among remaining repetition factors excluding 1 from the multiple repetition factors sorted in ascending order or descending order.

11. The method of claim 10, wherein the specific PRB is determined by applying the additional PRB offset n times in addition to a configured initial PRB offset.

12. The method of claim 8, wherein the PUCCH is related to message 4 (Msg4) for hybrid automatic repeat request-acknowledgement (HARQ-ACK).

13. The method of claim 8, wherein the first information is related to PUCCH-ConfigCommon.

14. The method of claim 8, wherein based on the additional PRB offset being not provided through the first information, the additional PRB offset is configured to 0.

15. A user equipment (UE) in a wireless communication system, the UE comprising:

a transceiver;
at least one processor; and
at least one memory operably connectable to the at least one processor and configured to store instructions performing operations based on being executed by the at least one processor,
wherein the operations comprise all steps of a method according to any one of claims 1 to 7.

16. A base station in a wireless communication system, the base station comprising:

a transceiver;
at least one processor; and
at least one memory operably connectable to the at least one processor and configured to store instructions performing operations based on being executed by the at least one processor,
wherein the operations comprise all steps of a method according to any one of claims 8 to 14.

17. A control device controlling a user equipment in a wireless communication system, the control device comprising:

at least one processor; and
at least one memory operably connected to the at least one processor,
wherein the at least one memory is configured to store instructions performing operations based on being executed by the at least one processor, and
wherein the operations comprise all steps of a method according to any one of claims 1 to 7.

18. A control device controlling a base station in a wireless communication system, the control device comprising:

at least one processor; and
at least one memory operably connected to the at least one processor,
wherein the at least one memory is configured to store instructions performing operations based on being executed by the at least one processor, and
wherein the operations comprise all steps of a method according to any one of claims 8 to 14.

19. One or more non-transitory computer readable mediums storing one or more instructions,

wherein the one or more instructions are configured to perform operations based on being executed by one or more processors, and
wherein the operations comprise all steps of a method according to any one of claims 1 to 7.

20. One or more non-transitory computer readable mediums storing one or more instructions,

wherein the one or more instructions are configured to perform operations based on being executed by one or more processors, and
wherein the operations comprise all steps of a method according to any one of claims 8 to 14.

[FIG. 1]

INITIAL CELL SEARCH | SYSTEM INFORMATION RECEPTION | RANDOM ACCESS PROCEDURE | GENERAL DL/UL Tx/Rx

PSS-SSS& [DLRS]& PBCH — S11

PDCCH/ PDSCH (BCCH) — S12

PRACH — S13 · PDCCH/PDSCH — S14 · PUSCH — S15 · PDCCH/PDSCH — S16

PDCCH/PDSCH — S17 · PUSCH/PUCCH — S18

· DL/UL ACK/NACK
· UE CQI/PMI RI REPORT
  USING PUSCH AND PUCCH

[FIG. 2]

【FIG. 3】

Resource grid

A carrier
(up to 3300
subcarriers,
i.e.,275 RBs)

A BWP

1RB=12
subcarriers

1 RE

1 subcarrier

1 symbol

l=0 · · ·

k=0

【FIG. 4】

1 slot

DL control region

DL data or UL data region

UL control region

【FIG. 5】

【FIG. 6】

[FIG. 7]

```
                    ( Start )
                        │
                        ▼
┌─────────────────────────────────────────────┐
│   Receive first information of additional    │───S710
│      PRB offset from base station            │
└─────────────────────────────────────────────┘
                        │
                        ▼
┌─────────────────────────────────────────────┐
│  Receive second information of multiple      │───S720
│    repetition factors from base station      │
└─────────────────────────────────────────────┘
                        │
                        ▼
┌─────────────────────────────────────────────┐
│ Determine specific PRB for repetition        │
│ transmission of PUCCH by applying            │───S730
│ additional PRB offset a specific number      │
│ of times based on specific repetition        │
│ factor among multiple repetition factors     │
└─────────────────────────────────────────────┘
                        │
                        ▼
┌─────────────────────────────────────────────┐
│  Perform repetition transmission of PUCCH    │───S740
│         based on specific PRB                │
└─────────────────────────────────────────────┘
                        │
                        ▼
                    (  End  )
```

[FIG. 8]

```
            ╭─────────╮
            │  Start  │
            ╰────┬────╯
                 │
                 ▼
 ┌───────────────────────────────────────┐
 │ Transmit first information of additional PRB │ ──── S810
 │              offset to UE               │
 └───────────────────┬───────────────────┘
                     │
                     ▼
 ┌───────────────────────────────────────┐
 │ Transmit second information of multiple repetition │ ──── S820
 │              factors to UE              │
 └───────────────────┬───────────────────┘
                     │
                     ▼
 ┌───────────────────────────────────────┐
 │ Receive repetition transmission of PUCCH │ ──── S830
 │       based on specific PRB from UE      │
 └───────────────────┬───────────────────┘
                     │
                     ▼
            ╭─────────╮
            │   End   │
            ╰─────────╯
```

【FIG. 9】

## INTERNATIONAL SEARCH REPORT

International application No.

**PCT/KR2024/001914**

### A. CLASSIFICATION OF SUBJECT MATTER

**H04W 72/21**(2023.01)i; **H04L 1/08**(2006.01)i; **H04W 72/04**(2009.01)i; **H04W 74/00**(2009.01)i; **H04W 84/06**(2009.01)i

According to International Patent Classification (IPC) or to both national classification and IPC

### B. FIELDS SEARCHED

Minimum documentation searched (classification system followed by classification symbols)

H04W 72/21(2023.01); H04B 7/06(2006.01); H04L 1/18(2006.01); H04L 27/26(2006.01); H04L 5/00(2006.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUCCH(physical uplink control channel), 반복(repetition), PRB 오프셋(physical resource block offset), 반복인자(repetition factor)

### C. DOCUMENTS CONSIDERED TO BE RELEVANT

| Category* | Citation of document, with indication, where appropriate, of the relevant passages | Relevant to claim No. |
|---|---|---|
| Y | WO 2022-238907 A1 (LENOVO (SINGAPORE) PTE. LTD.) 17 November 2022 (2022-11-17)<br>See paragraphs [0052]-[0067]; and table 1. | 1,5-6,8,12-13,15-20 |
| A | | 2-4,7,9-11,14 |
| DY | 3GPP; TSG RAN; NR; Physial layer procedures for control (Release 17). 3GPP TS 38.213 V17.4.0. 04 January 2023.<br>See section 9.2.6. | 1,5-6,8,12-13,15-20 |
| Y | WO 2022-077413 A1 (ZTE CORPORATION) 21 April 2022 (2022-04-21)<br>See pages 18-20. | 5,12 |
| A | US 2023-0042237 A1 (QUALCOMM INCORPORATED) 09 February 2023 (2023-02-09)<br>See paragraphs [0029]-[0067]. | 1-20 |
| A | WO 2022-154922 A1 (QUALCOMM INCORPORATED) 21 July 2022 (2022-07-21)<br>See paragraphs [0093]-[0135]. | 1-20 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 June 2024** | **05 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/001914**

| Patent document cited in search report | | | Publication date (day/month/year) | Patent family member(s) | | | Publication date (day/month/year) |
|---|---|---|---|---|---|---|---|
| WO | 2022-238907 | A1 | 17 November 2022 | AU | 2022-272750 | A1 | 12 October 2023 |
| | | | | BR | 112023023116 | A2 | 06 February 2024 |
| | | | | CN | 117296286 | A | 26 December 2023 |
| | | | | EP | 4338347 | A1 | 20 March 2024 |
| | | | | JP | 2024-517920 | A | 23 April 2024 |
| WO | 2022-077413 | A1 | 21 April 2022 | BR | 112023005721 | A2 | 02 May 2023 |
| | | | | CN | 116349339 | A | 27 June 2023 |
| | | | | EP | 4205479 | A1 | 05 July 2023 |
| | | | | EP | 4205479 | A4 | 15 November 2023 |
| | | | | KR | 10-2023-0061478 | A | 08 May 2023 |
| | | | | US | 2023-0231662 | A1 | 20 July 2023 |
| US | 2023-0042237 | A1 | 09 February 2023 | None | | | |
| WO | 2022-154922 | A1 | 21 July 2022 | BR | 112023013550 | A2 | 05 December 2023 |
| | | | | CN | 116830704 | A | 29 September 2023 |
| | | | | EP | 4278463 | A1 | 22 November 2023 |
| | | | | JP | 2024-505351 | A | 06 February 2024 |
| | | | | KR | 10-2023-0129439 | A | 08 September 2023 |
| | | | | US | 2022-0232555 | A1 | 21 July 2022 |

Form PCT/ISA/210 (patent family annex) (July 2022)